Europäisches Patentamt

European Patent Office

Office européen des brevets

(11) Numéro de publication: **0 275 775**
**A2**

## (12) DEMANDE DE BREVET EUROPEEN

(21) Numéro de dépôt: 87402938.2

(22) Date de dépôt: 21.12.87

(51) Int. Cl.⁴: **B23Q 35/10** , B27C 7/06

(30) Priorité: 23.12.86 FR 8618058

(43) Date de publication de la demande:
27.07.88 Bulletin 88/30

(84) Etats contractants désignés:
BE CH DE GB LI

(71) Demandeur: **ETABLISSEMENTS BORDET,
S.à.r.l. dite:**
23, rue Traversière
F-93100 Montreuil Sous Bois(FR)

(72) Inventeur: **Bordet, Raymond**
23, rue Traversière
F-93100 Montreuil sous Bois(FR)

(74) Mandataire: **Faber, Jean-Paul**
CABINET FABER 34, rue de Leningrad
F-75008 Paris(FR)

(54) **Copieur pour tour à bois.**

(57) Mécanique.

Copieur pour tour à bois du type comprenant un bâti (1), un chariot (15), des moyens de guidage (5,11) et d'entraînement (21,22) pour le chariot (15) sur le bâti (1), des moyens (13) pour la fixation d'un gabarit (8) sur ledit bâti (1), un palpeur (51) porté par un coulisseau (38) mobile dans une rainure (37) du chariot contre l'action de moyens élastiques (48) et portant un outil (39) caractérisé en ce que le coulisseau (38) est incliné de manière à former avec l'axe de déplacement du chariot au travail et en arrière par rapport au sens de déplacement un angle compris entre 100° et 135°.

FIG.1

EP 0 275 775 A2

## L'invention vise un copieur pour tour à bois.

Généralement les copieurs comprennent un bâti comportant un chariot mobile parallèlement à l'axe de rotation de la pièce à travailler, un coulisseau portant un outil et déposé perpendiculairement audit axe de rotation, ledit coulisseau étant sollicité par des moyens élastiques en direction dudit axe et portant un palpeur coopérant avec un gabarit.

La technique antérieure connaît de nombreux copieurs de ce type, toutefois ceux-ci sont très complexes et chers.

L'un des buts de la présente invention est de réaliser un copieur qui soit d'une structure simple à réaliser et qui, par conséquent, soit peu onéreux pour pouvoir notamment avoir une diffusion importante auprès des bricoleurs.

Le copieur, selon l'invention est du type comprenant un bâti, un chariot, des moyens de guidage et d'entraînement pour le chariot sur le bâti, des moyens pour la fixation d'un gabarit sur ledit bâti, un palpeur porté par un coulisseau mobile dans une rainure du chariot contre l'action de moyens élastiques et portant un outil, le coulisseau étant susceptible d'être incliné de manière à former avec l'axe de déplacement du chariot au travail et en arrière par rapport au sens de déplacement un angle compris entre 100° et 135°, ledit copieur étant caractérisé en ce que le bâti comprend deux ailes reliées par une traverse constituée par un profilé en L, l'une des branches comportant des moyens pour la fixation du gabarit, tandis que l'autre branche porte une tige de guidage du chariot qui comprend un corps percé d'un trou circulaire traversé par une barre de guidage reliant les deux ailes et deux doigts disposés de part et d'autre de la tige de guidage et portant contre celle-ci.

On réalise ainsi, un copieur d'une fabrication simple et qui offre néanmoins de grandes qualités pour la fabrication de pièces tournées en bois.

Suivant une caractéristique constructive, le corps du chariot est pourvu d'une chape dans les ailes de laquelle est tourillonné un axe dont une extrémité est pourvue d'un volant de manoeuvre pourvu d'une poignée, la partie de l'axe située entre les deux ailes de la chape étant filetée, un câble étant enroulé dans plusieurs spires du filetage et étant à une extrémité fixé à une aile du bâti et à l'autre extrémité fixé à l'autre aile dudit bâti.

Suivant encore une caractéristique constructive, le coulisseau porte un lardon monté coulissant sur ledit coulisseau et sur lequel est fixé le palpeur, ledit lardon comportant une vis de butée pour limiter le coulissement du coulisseau dans la rainure, des moyens pour le caler sur le coulisseau, des moyens pour caler la vis de butée et des moyens pour l'accrochage d'une extrémité d'un ressort de traction dont l'autre extrémité est fixée au corps du chariot.

Enfin afin de pouvoir faire varier l'angle du coulisseau, la rainure dans laquelle est mobile le coulisseau est portée par une pièce indépendante du chariot et montée pivotante sur celui-ci, des moyens étant prévus pour la caler dans toute position angulaire convenable.

L'invention va maintenant être décrite avec plus de détails en se référant à des modes de réalisation particuliers donnés, à titre d'exemple seulement et représentés aux dessins annexés, dans lesquels :

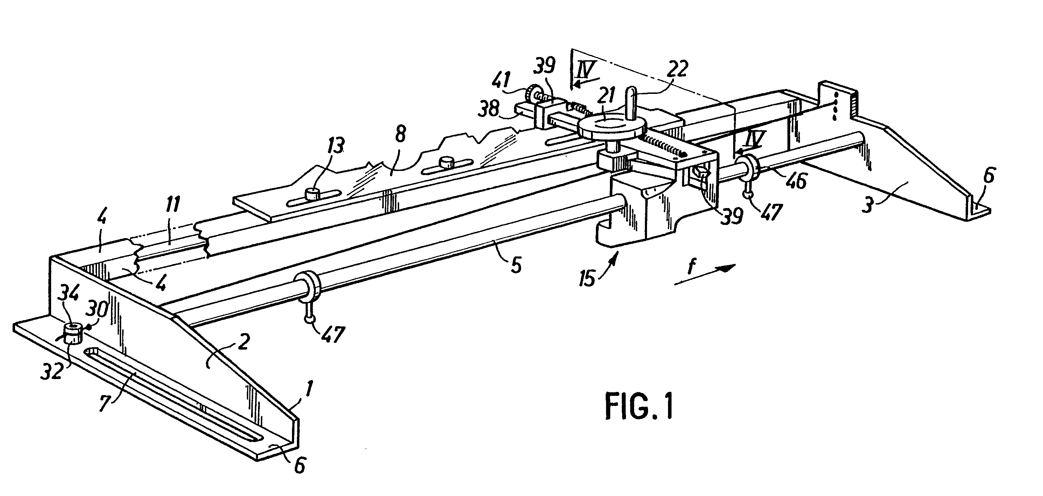

Figure 1 est une vue en perspective d'un copieur, selon l'invention.

Figure 2 est une vue en perspective à plus grande échelle du chariot.

Figure 3 est une vue en plan du chariot.

Figure 4 est une vue en ccupe suivant la ligne IV-IV de la figure 1.

Le dispositif représenté aux figures comprend un bâti 1 formé de deux ailes 2 et 3 reliées par une traverse 4, et par une barre de guidage 5.

Chaque aile 2 et 3 comporte un talon 6 percé d'un trou oblong 7 permettant le passage de vis pour la fixation du copieur devant un tour à bois. La traverse 4 est constituée par un profilé en L avec deux branches 4a et 4b, la branche 4a étant destinée à supporter un gabarit 8, tandis que la branche 4b reçoit fixée par des vis 9 une tige de guidage 11.

L'aile 4a est percée de trous taraudés 12 dans lesquels se vissent des vis 13 qui traversent des trous allongés 14 du gabarit 8 et qui assurent par leur tête la fixation de ce dernier.

Sur la barre de guidage 5 est engagé un chariot 15 qui comporte un corps 16 avec une chape verticale 17 dans les ailes 18 de laquelle est tourillonné un axe 20 dont l'extrémité supérieure porte un volant 21 pourvu d'une poignée 22. L'axe 20, dans sa partie située entre les ailes 18 comporte un filetage 23 sur lequel s'enroule sur un certain nombre de spires un câble 24 dont une extrémité est fixée à l'aile 3, tandis que l'autre extrémité traverse l'aile 2 par un trou 30 et est fixée entre deux écrous 32 sur une vis 34 afin de pouvoir assurer la tension du câble.

En tournant le volant 21 dans un sens, on assure le déplacement du chariot 15 dans un sens et la rotation du volant dans l'autre sens engendre le déplacement du chariot 15 dans le sens opposé.

Le chariot 15 comporte deux tétons 35 et 36 qui sont disposés de part et d'autre de la tige 11 et qui portent contre celle-ci de manière à éviter tout basculement dudit chariot.

Le chariot 15 comporte une rainure 37 dans laquelle est guidé un coulisseau 38 qui porte à une extrémité un outil de coupe 39. La rainure est fermée par un couvercle 40 fixé par des vis 59 et qui porte une poignée 42.

Sur le coulisseau 38 est monté coulissant un lardon 61 portant un palpeur 51 et une vis de butée 41 vissée dans un taraudage 45. Le lardon 61 comporte deux vis de blocage 43 et 44, la vis 43 étant destinée à assurer la fixation dudit lardon 61 sur le coulisseau, tandis que la vis 44 permet de caler la vis de butée 41.

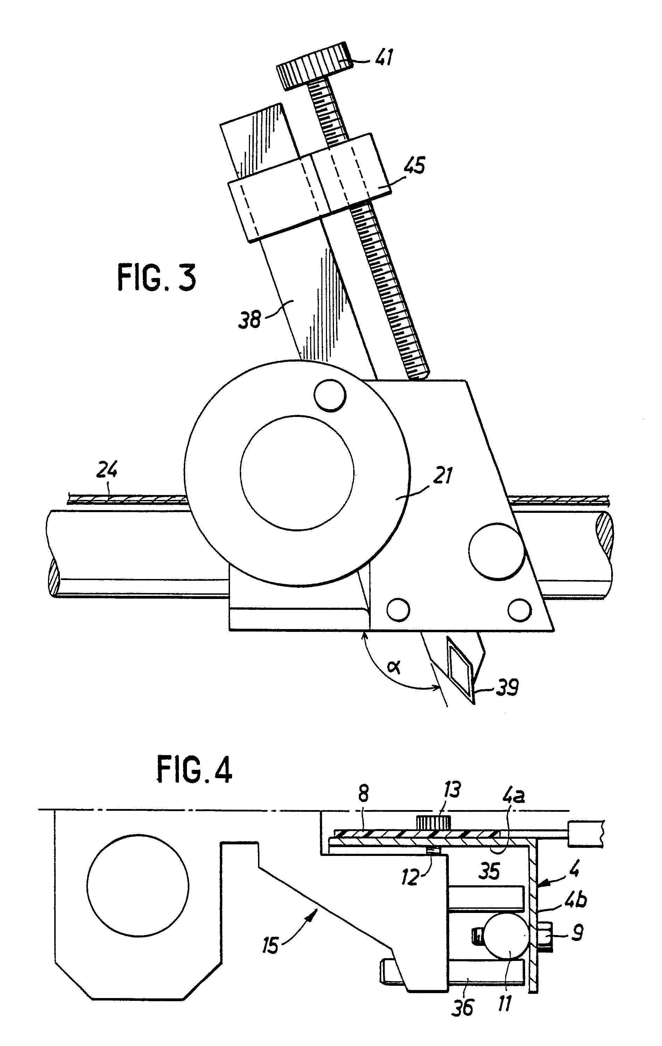

Comme on le voit à la figure 3 l'outil 39 forme avec l'axe de déplacement du chariot 15 et en arrière, par rapport audit déplacement un angle α de l'ordre de 110°.

Sur la barre de guidage 5 sont prévues deux bagues 46 pourvues de vis de blocage 47 et destinées à constituer des butées pour limiter les déplacements du chariot 15. Sur le lardon 61 , il est prévu un téton 49 sur lequel est accrochée l'une des extrémités d'un ressort de traction et l'autre extrémité est accrochée à un téton 50 prévu sur le couvercle 40.

Après avoir effectué les différents réglages, on place le chariot au voisinage de l'aile 2, puis on déplace celui-ci dans le sens de la flèche f, le palpeur 40 suit les contours du gabarit 8 de sorte que le coulisseau 38 contre l'action du ressort 48 glisse dans la rainure 37.

Le copieur, selon l'invention, est plus particulièrement destiné aux bricoleurs qui utilisent des tours à bois de faible puissance, ce qui oblige à travailler par passes successives dans lesquelles l'outil 39 travaille peu profondément ; la vis 41 permet aisément de régler la profondeur desdites passes.

Grâce à l'inclinaison de l'outil par rapport au sens d'avancement le palpeur 40 peut gravir des pentes très inclinées le long du gabarit 8 ce qui évite d'avoir manuellement, comme cela se fait habituellement, à tirer le coulisseau 38 contre l'action du ressort 48.

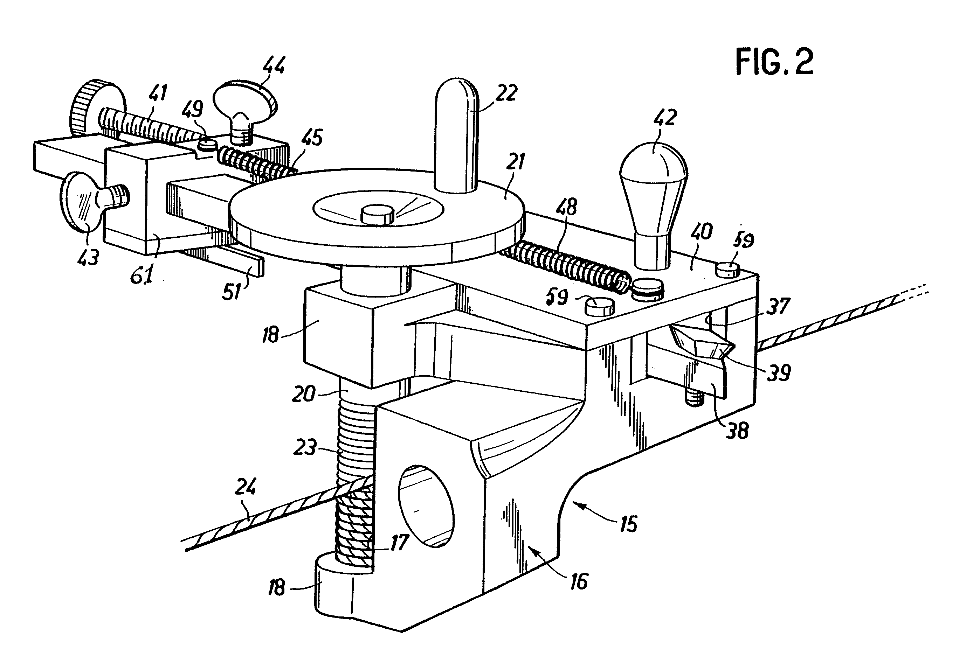

Le bouton de manoeuvre 42 (fig. 2) permet de ramener rapidement le copieur en position de départ sans être obligé de tourner le volant 21. En effet le volant 21 n'est utilisé que pendant le déplacement en usinage.

Lorsque le copieur est arrivé en fin de course vers l'aile 3, le retour rapide vers l'aile 2 s'effectue par le bouton de manoeuvre 42. Il suffit pour effectuer ce retour rapide de dégager manuellement le coulisseau 38 vers l'arrière de façon à ce que le palpeur 51 ne se trouve plus en contact avec le gabarit 8.

Cette possibilité est offerte grâce à la conception d'entraînement du copieur par câble. Un entraînement par pignon crémaillère ne permettrait pas ce genre de manoeuvre.

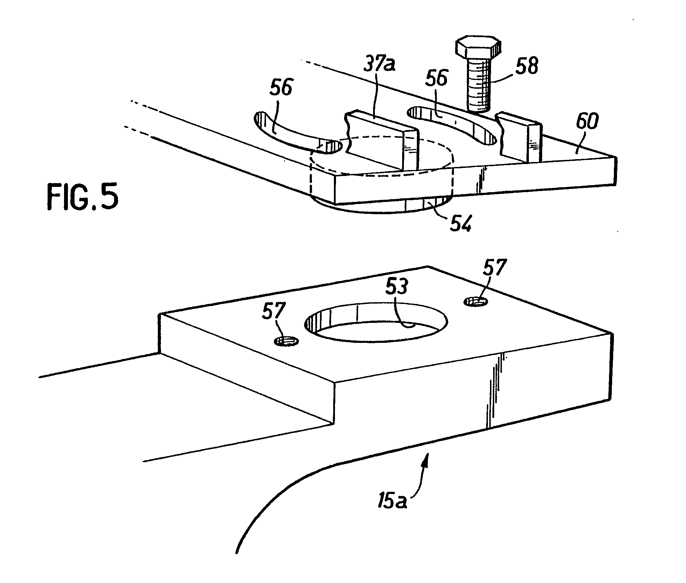

Dans une variante de réalisation représentée à la figure 5, la rainure 37a dans laquelle est mobile le coulisseau est réalisée sur une pièce indépendante 60 du chariot 15a. Cette pièce porte un doigt cylindrique 54 qui coopère avec une cavité correspondante 53 du chariot, celui-ci étant pourvu de deux trous taraudés 57 dans lesquels se vissent des vis 58 traversant des trous en arc de cercle 56 de la pièce 60. Les arcs de cercle des trous 56 ont le même centre que le doigt 54 et la cavité 53.

Grâce à cette disposition, on peut orienter facilement la pièce 60 et ainsi modifier à volonté la position angulaire de l'outil 39 et du palpeur suivant le profil du gabarit 8.

Bien entendu, l'invention n'est pas limitée aux modes de réalisation qui viennent d'être décrits et représentés. On pourra y apporter de nombreuses modifications de détail sans sortir pour cela du cadre de l'invention.

**Revendications**

1°-Copieur pour tour à bois du type comprenant un bâti (1), un chariot (15), des moyens de guidage (5,11) et d'entraînement (21-22) pour le chariot (15) sur le bâti (1), des moyens (13) pour la fixation d'un gabarit (8) sur ledit bâti (1), un palpeur (51) porté par un coulisseau (38) mobile dans une rainure (37) du chariot contre l'action de moyens élastiques (48) et portant un outil (39), le coulisseau (38) étant susceptible d'être incliné de manière à former avec l'axe de déplacement du chariot au travail et en arrière par rapport au sens de déplacement un angle, compris entre 100° et 135°, caractérisé en ce que le bâti (1) comprend deux ailes (2 et 3) reliées par une traverse (4) constituée par un profilé en L, l'une des branches de ladite traverse (4a) comportant des moyens (13, 12) pour la fixation du gabarit (8) tandis que l'autre branche (4b) porte une tige de guidage (11) du chariot (15) qui comprend un corps (16) percé d'un trou circulaire traversé par une barre de guidage (5) reliant les deux ailes (2 et 3) et deux doigts disposés de part et d'autre de la tige de guidage (11) et portant contre celle-ci.

2°-Copieur selon la revendication 1 caractérisé en ce que le corps (16) du chariot (15) est pourvu d'une chape (17) dans les ailes (18) de laquelle est tourillloné un axe (20) dont une extrémité est pourvue d'un volant de manoeuvre (21) pourvu d'une poignée (22), la partie de l'axe (20) située entre les deux ailes (18) de la chape (17) étant filetée (23), un câble (24) étant enroulé dans plusieurs spires du filetage et étant à une extrémité fixé à une aile (2) du bâti et à l'autre extrémité fixé à l'autre aile (3) dudit bâti.

3°-Copieur pour tour à bois, selon les revendications 1 et 2, caractérisé en ce que le coulisseau (38) porte un lardon (61) monté coulissant sur ledit coulisseau et sur lequel est fixé le palpeur (51), ledit lardon (61) comportant une vis de butée (41) pour limiter le coulisse ment du coulisseau (38) dans la rainure (37), des moyens (43) pour le caler sur le coulisseau (38), des moyens (44) pour caler la vis de butée (41) et des moyens pour l'accrochage d'une extrémité d'un ressort de traction (48) dont l'autre extrémité est fixée au corps (15) du chariot (16).

4°-Copieur pour tour à bois, selon la revendication 1, caractérisé en ce que la rainure (37a) dans laquelle est mobile le coulisseau est portée par une pièce (60) indépendante du chariot et montée pivotante sur celui-ci des moyens (57,58) étant prévus pour la caler dans toute position angulaire convenable.

FIG.1

FIG.2

FIG. 3

41

45

38

24

21

α

39

FIG.4

8    13    4a

12    35    4

15    4b

9

36    11

FIG.5

56  37a  56  58

60

54

57  53  57

15a

0 275 775